# EUROPEAN PATENT APPLICATION

(11) **EP 4 425 283 A1**
(43) Date of publication of application: **04.09.2024**
(21) Application number: 22887253.7
(22) Date of filing: 06.04.2022
(51) Int. Cl.: G05B 19/4093, G05B 19/414, B23Q 17/22

(54) **PROGRAM PROVISION DEVICE AND METHOD**

(30) Priority: 25.10.2021 KR 20210142447
(71) Applicant: Hanwha Precision Machinery Co., Ltd., Changwon-si, Gyeongsangnam-do 51552 (KR)
(72) Inventor: KIM, Min Su, Changwon-si Gyeongsangnam-do 51552 (KR); SO, Chang Ju, Changwon-si Gyeongsangnam-do 51552 (KR); HA, Sung Min, Changwon-si Gyeongsangnam-do 51552 (KR)
(74) Representative: Gulde & Partner
(86) International application number: PCT/KR2022/004924
(87) International publication number: WO 2023/075046

(57) **Abstract**

The present disclosure relates to a program providing apparatus and method, and more particularly, to a program providing apparatus and method which convert a machining program generated by a CAD program to realize the movement of a tool along a path to which a tool nose radius of the tool has been applied.

The program providing apparatus according to an embodiment of the present disclosure includes an input unit receiving a machining program which does not consider a tool nose radius of a tool used for turning and a program generation unit generating a modified machining program which considers the tool nose radius of the tool by analyzing the machining program.

## Description

### [Technical Field]

The present disclosure relates to a program providing apparatus and method, and more particularly, to a program providing apparatus and method which convert a machining program generated by a CAD program to realize the movement of a tool along a path to which a tool nose radius of the tool has been applied.

### [Background Art]

A computerized numerical control (CNC) automatic lathe is a device for machining a side or front of a workpiece by bringing a tool into contact with the workpiece while rotating the workpiece chucked on a main spindle. An end of the tool in contact with the workpiece may be made of a material for cutting a surface of the workpiece.

In order to effectively cut the surface of the workpiece, the end, i.e., nose of the tool may be sharp. However, due to the limitations of tool manufacturing technology or the intended use of the tool, the tool noise may not have an ideally sharp shape but may be provided in the shape of an arc with a certain radius.

Meanwhile, a machining program used in the CNC automatic lathe is generated based on a drawing produced by a drawing production program such as CAD. The machining program may assume that a workpiece is machined with a tool having an ideally sharp tool nose. Therefore, if the machining program is input to the CNC automatic lathe in which a tool having a tool nose with a certain radius is installed, a workpiece may be machined with an error corresponding to the radius of the tool noise.

Therefore, there is a need for an invention that allows a workpiece to be machined by the CNC automatic lathe by applying the tool noise radius.

### [Disclosure]

### [Technical Problem]

Aspects of the present disclosure provide a program providing apparatus and method which convert a machining program generated by a CAD program to realize the movement of a tool along a path to which a tool nose radius of the tool has been applied.

However, aspects of the present disclosure are not restricted to the one set forth herein. The above and other aspects of the present disclosure will become more apparent to one of ordinary skill in the art to which the present disclosure pertains by referencing the detailed description of the present disclosure given below.

### [Technical Solution]

According to an aspect of the present disclosure, there is provided a program providing apparatus including: an input unit receiving a machining program which does not consider a tool nose radius of a tool used for turning; and a program generation unit generating a modified machining program which considers the tool nose radius of the tool by analyzing the machining program.

The program generation unit generates the modified machining program with reference to the tool nose radius of the tool, a machining system of a computerized numerical control (CNC) automatic lathe which machines a workpiece using the tool, an axial direction of an insert included in the tool, and a direction of the insert.

The program generation unit determines the outer shape of a final result of a workpiece through the machining program and generates the modified machining program for moving the tool by applying the tool nose radius of the tool to the outer shape of the final result.

The program providing apparatus further includes a storage unit storing a conversion function for each machining type of the tool, wherein the program generation unit generates the modified machining program by applying the conversion function to codes included in the machining program.

The machining types include a type in which the movement path of the tool is changed while a workpiece is being machined.

The machining types include at least one of a type including a path where the tool enters a tapered section or leaves the tapered section and a type including a path where the tool enters an arc section or leaves the arc section.

The tool nose radius of the tool is included in the conversion function in the form of a variable.

The program providing apparatus further includes an output unit outputting the machining program and the modified machining program.

A user interface output through a screen of the output unit includes a parameter area where tool parameters can be input or selected by a user, a reference display area where codes of the machining program are displayed, and a modified display area where codes of the modified machining program are displayed.

The program providing apparatus further includes a transmission unit transmitting the modified machining program to the CNC automatic lathe which machines a workpiece using the tool.

According to another aspect of the present disclosure, there is provided a program providing method including: receiving a machining program which does not consider a tool nose radius of a tool used for turning; and generating a modified machining program which considers the tool nose radius of the tool by analyzing the machining program.

The generating of the modified machining program includes generating the modified machining program with reference to the tool nose radius of the tool, a machining system of a CNC automatic lathe which machines a workpiece using the tool, an axial direction of an insert included in the tool, and a direction of the insert.

The generating of the modified machining program includes: determining the outer shape of a final result of a workpiece through the machining program; and generating the modified machining program for moving the tool by applying the tool nose radius of the tool to the outer shape of the final result.

The program providing method further includes storing a conversion function for each machining type of the tool, wherein the generating of the modified machining program includes generating the modified machining program by applying the conversion function to codes included in the machining program.

The machining types include a type in which the movement path of the tool is changed while a workpiece is being machined.

The machining types include at least one of a type including a path where the tool enters a tapered section or leaves the tapered section and a type including a path where the tool enters an arc section or leaves the arc section.

The tool nose radius of the tool is included in the conversion function in the form of a variable.

The program providing method further includes outputting the machining program and the modified machining program using an output unit.

A user interface output through a screen of the output unit includes a parameter area where tool parameters can be input or selected by a user, a reference display area where codes of the machining program are displayed, and a modified display area where codes of the modified machining program are displayed.

The program providing method further includes transmitting the modified machining program to the CNC automatic lathe which machines a workpiece using the tool.

Other details of the present disclosure are included in the detailed description and the drawings.

### [Advantageous Effects]

A program providing apparatus and method according to the present disclosure convert a machining program generated by a CAD program to realize the movement of a tool along a path to which a tool nose radius of the tool has been applied. Therefore, a user can easily apply the converted machining program to a computerized numerical control (CNC) automatic lathe.

However, the effects of the present disclosure are not limited to the aforementioned effects, and various other effects are included in the present specification.

### [Description of Drawings]

FIG. 1 is a block diagram of a program providing apparatus according to an embodiment of the present disclosure;
FIG. 2 is a diagram for explaining a tool nose of a tool;
FIG. 3 illustrates a tool movement path according to a machining program and a tool movement path according to a modified machining program;
FIG. 4 is a diagram for explaining the operation of a program generation unit;
FIG. 5 illustrates a conversion function table;
FIG. 6 is a diagram for explaining machining types of the tool;
FIG. 7 is a diagram for explaining the conversion of a machining program into a modified machining program;
FIG. 8 illustrates a user interface output through an output unit; and
FIG. 9 illustrates a modified machining program displayed through the user interface.

### [Mode for Invention]

Hereinafter, exemplary embodiments of the present disclosure will be described in further detail with reference to the accompanying drawings. Advantages and features of the present disclosure and methods of accomplishing the same may be understood more readily by reference to the following detailed description of exemplary embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the present disclosure to those skilled in the art, and the present disclosure will only be defined by the appended claims. Like reference numerals refer to like elements throughout the specification.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

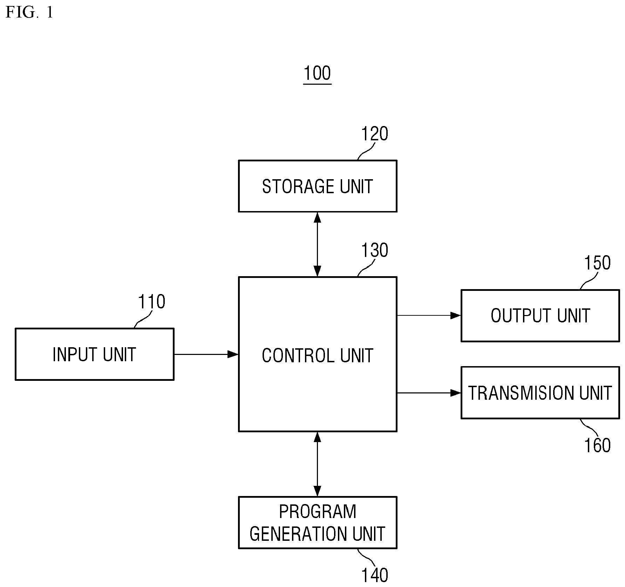

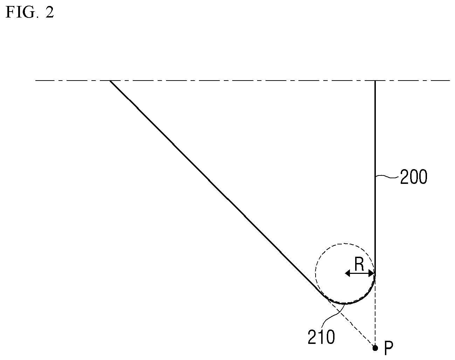

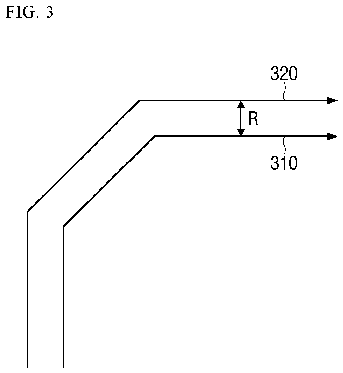

FIG. 1 is a block diagram of a program providing apparatus according to an embodiment of the present disclosure. FIG. 2 is a diagram for explaining a tool nose of a tool. FIG. 3 illustrates a tool movement path according to a machining program and a tool movement path according to a modified machining program.

Referring to FIG. 1, the program providing apparatus 100 according to the embodiment of the present disclosure includes an input unit 110, a storage unit 120, a control unit 130, a program generation unit 140, an output unit 150, and a transmission unit 160.

The input unit 110 may receive a machining program. The machining program that the input unit 110 receives may be a machining program that does not consider a tool nose radius of a tool used for turning.

Referring to FIG. 2, a tool 200 may include a tool nose 210 having a radius R of a certain size.

The tool 200 may be provided in a computerized numerical control (CNC) automatic lathe and used to machine workpieces. For example, the tool 200 may be used to perform a cutting operation on a workpiece. The tool 200 may be brought into contact with a surface of a rotating workpiece to machine the surface of the workpiece.

The tool nose 210, which is an end of the tool 200 in contact with a workpiece, may ideally be a single point P. However, the tool nose 210 may have a certain curvature due to manufacturing limitations or workpiece machining environment. In this case, the tool nose 210 may not be a single point P but may have a certain curvature. The curvature may correspond to the radius R of a circle that forms the arc of the tool nose 210. The radius of the circle that forms the tool nose 210 will hereinafter be referred to as a tool nose radius R.

The CNC automatic lathe may perform a machining operation on a workpiece according to a machining program. The machining program includes the movement path of the tool 200, and the CNC automatic lathe may machine the workpiece while moving the tool 200 along the movement path specified in the machining program.

The machining program may be generated based on a drawing file for the workpiece, and the movement path of the tool 200 may be determined according to the outer shape of the workpiece shown in the drawing file. Here, the movement path according to the outer shape of the workpiece shown in the drawing file is a movement path that does not consider the tool nose radius R at all. That is, the movement path is a movement path in a case where the tool nose 210 is ideally the point P. Therefore, if a machining operation is performed on the workpiece according to the machining program that does not consider the tool nose radius R, an intended result may not be produced.

Referring to FIG. 3, a movement path 310 (hereinafter, referred to as a reference movement path) of the tool 200 according to a machining program and a movement path 320 (hereinafter, referred to as a modified movement path) of the tool 200 according to a modified machining program may be formed differently.

If the tool 200 moves along the reference movement path 310 in a state where the tool nose 210 is the ideal point P, an intended result may be produced. On the other hand, if the tool 200 moves along the reference movement path 310 in a state where the tool nose 210 has a radius of a certain size rather than the ideal point P, an unintended result may be generated. In the state where the tool nose 210 has a radius of a certain size, an intended result can be produced only when the tool 200 moves along the modified movement path 320.

Therefore, it is desirable to input a machining program that considers the tool nose radius R to the CNC automatic lathe rather than inputting a machining program generated based on a drawing file to the CNC automatic lathe as it is.

The program providing apparatus 100 according to the embodiment of the present disclosure may convert a machining program that does not consider the tool nose radius R into a machining program that considers the tool nose radius R. The machining program that considers the tool nose radius R will hereinafter be referred to as a modified machining program.

Referring to FIG. 1 again, the input unit 110 may receive a machining program that does not consider the tool nose radius R. That is, a machining program generated based on a drawing file may be input through the input unit 110. The machining program may be provided in the form of a text file. In this case, the input unit 110 may receive a text file. Alternatively, according to some embodiments of the present disclosure, the input unit 110 may receive a user's text command. For example, the input unit 110 may be provided in the form of a keyboard or keypad to receive codes of a machining program from the user.

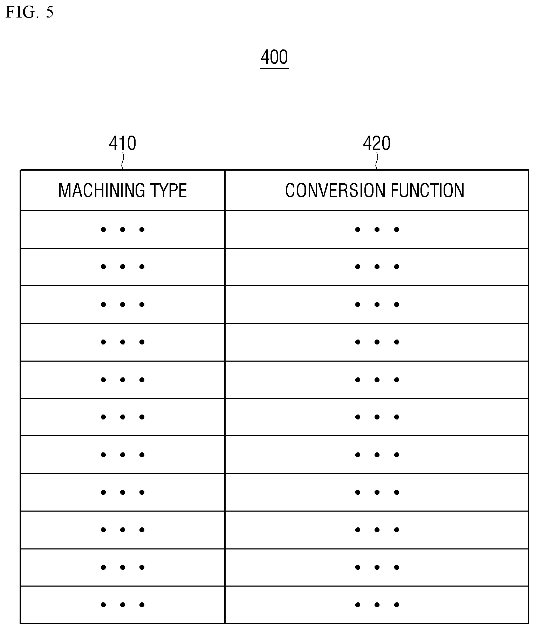

The storage unit 120 may temporarily or permanently store a machining program input through the input unit 110 and a modified machining program generated by the program generation unit 140 which will be described later. In addition, the storage unit 120 may store a conversion function for each machining type of the tool 200. The conversion function for each machining type of the tool 200 may be provided in the form of a table (hereinafter, referred to as a conversion function table). The conversion function table will be described in detail later with reference to FIG. 5.

The program generation unit 140 may analyze a machining program input through the input unit 110 and generate a modified machining program that considers the tool nose radius R of the tool 200. The program generation unit 140 may determine the outer shape of a final result through a machining program. Accordingly, the program generation unit 140 may generate a modified machining program for moving the tool 200 along the modified movement path 320 by applying the tool nose radius R to the outer shape of the final result.

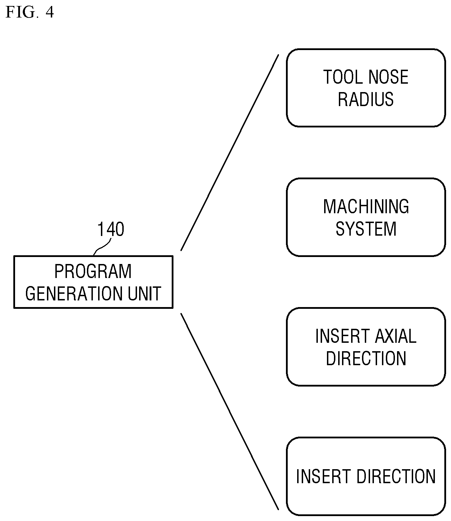

The operation of the program generation unit 140 will be described in detail later with reference to FIG. 4.

The output unit 150 may output a machining program and a modified machining program. For example, the output unit 150 may be provided in the form of a display. A user can check the machining program and the modified machining program through the screen of the output unit 150. Alternatively, the output unit 150 may be provided in the form of a printer. In this case, the user can check the machining program and the modified machining program through a document output through the output unit 150.

The transmission unit 160 may transmit a modified machining program to the CNC automatic lathe. The transmission unit 160 may establish a wired or wireless communication channel with the CNC automatic lathe and transmit the modified machining program through the communication channel. The CNC automatic lathe may machine a workpiece using the modified machining program received from the transmission unit 160.

The control unit 130 may perform overall control over the input unit 110, the storage unit 120, the program generation unit 140, the output unit 150, and the transmission unit 160.

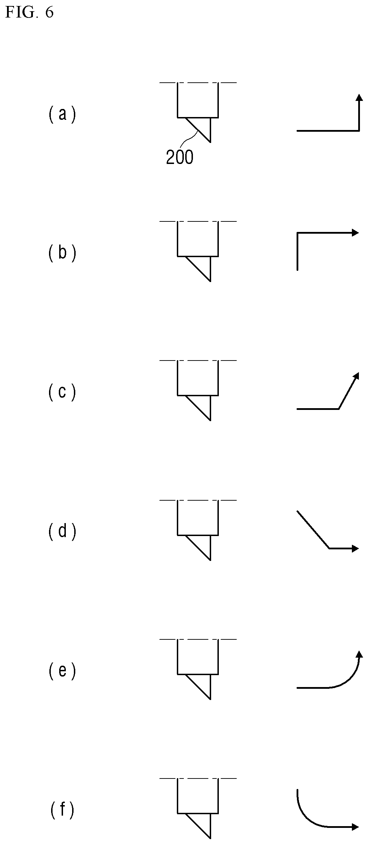

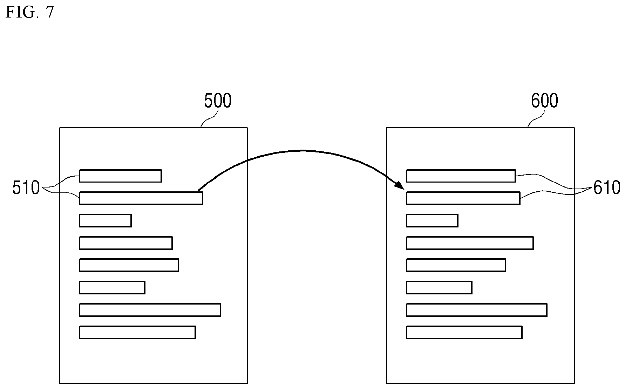

FIG. 4 is a diagram for explaining the operation of the program generation unit. FIG. 5 illustrates a conversion function table. FIG. 6 is a diagram for explaining machining types of a tool. FIG. 7 is a diagram for explaining the conversion of a machining program into a modified machining program.

Referring to FIG. 4, the program generation unit 140 may generate a modified machining program with reference to a tool nose radius, a machining system, an insert axial direction, and an insert direction.

The tool nose radius is the tool nose radius R of the tool 200. The machining system is a machining system of the CNC automatic lathe that machines workpieces using the tool 200. The machining system may include a main system and a sub-system. The sub-system is a system in which subsequent machining is performed on a workpiece that has been machined in the main system. For example, one side of a workpiece may be machined in the main system, and the other side of the workpiece, which is not machined in the main system, may be machined in the sub-system.

The insert axial direction is a direction in which an axis of an insert included in the tool 200 faces. When the insert is included in the tool 200, the tool nose 210 of the tool 200 described above is the tool nose 210 of the insert. The insert axial direction may determine the posture of the insert with respect to a rotation axis of a workpiece.

The insert direction is the direction of a cutting surface of the insert in contact with a workpiece. For example, the cutting surface may face a workpiece, a direction opposite to the workpiece, a left side of the workpiece, or a right side of the workpiece. The insert direction may be such direction of the cutting surface.

For turning of a workpiece, tool parameters including the tool nose radius R, the machining system, the insert axial direction, and the insert direction must be taken into consideration. The program generation unit 140 may generate a modified machining program by taking these tool parameters into consideration.

Referring to FIG. 5, the conversion function table 400 may include a machining type 410 and a conversion function 420.

As described above, the storage unit 120 may store the conversion function table 400. The conversion function table 400 may include the conversion function 420 for each machining type 410 of the tool 200.

The machining type 410 may include a type in which the movement path of the tool 200 is changed while a workpiece is being machined. The machining type 410 may include at least one of a type including a path where the tool 200 enters a tapered section or leaves the tapered section and a type including a path where the tool 200 enters an arc section or leaves the arc section.

Referring to FIG. 6, the tool 200 may machine a workpiece while changing its movement path. FIG. 6 assumes that the workpiece is placed on a right side of the tool 200.

As illustrated in (a), the tool 200 may move toward the workpiece and then change its path to a vertical direction. As illustrated in (b), the tool 200 may move in the direction perpendicular to the workpiece and then change its direction to the workpiece. As illustrated in (c), the tool 200 may move toward the workpiece and then enter a tapered section and change its path to an inclined direction. As illustrated in (d), the tool 200 may move in the inclined direction and then leave the tapered section and change its direction to the workpiece. As illustrated in (e), the tool 200 may move toward the workpiece and then enter an arc section and change its direction in a curved shape. As illustrated in (f), the tool 200 may move in the curved shape and then leave the arc section and change its direction to the workpiece.

The machining types of the tool 200 illustrated in FIG. 6 are only examples, and there may be more diverse machining types of the tool 200.

The conversion function table 400 may include the conversion function 420 for each of these various machining types 410. The conversion function 420 may be generated by reflecting the above-described tool parameters for each machining type 410. That is, different conversion functions 420 reflecting different tool parameters can be generated for one machining type 410. Here, the tool nose radius R among the tool parameters may be included in the conversion function 420 in the form of a variable. In this case, the conversion function 420 may convert codes of a machining program according to the tool nose radius R.

Referring to FIG. 7, the program generation unit 140 may generate codes 610 of a modified machining program 600 by applying the conversion function 420 to codes 510 included in a machining program 500.

The machining program 500 may include a plurality of codes 510 that determine the movement path of the tool 200. The program generation unit 140 may determine the machining type 410 of the tool 200 included in a code 510 and extract the conversion function 420 corresponding to the machining type 410 from the conversion function table 400. Then, the program generation unit 140 may generate a modified code 610 by converting the code 510 using the extracted conversion function 420. The modified machining program 600 may be generated by completing the conversion of all codes 510 included in the machining program 500.

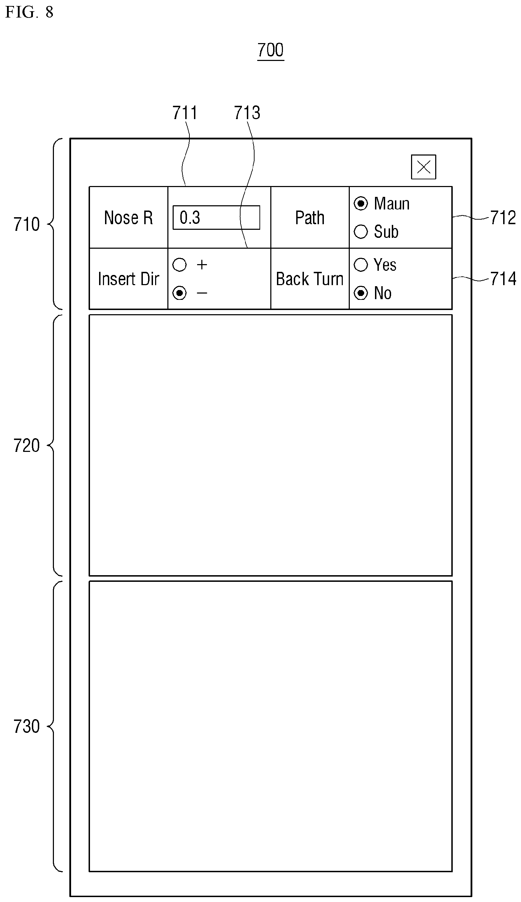

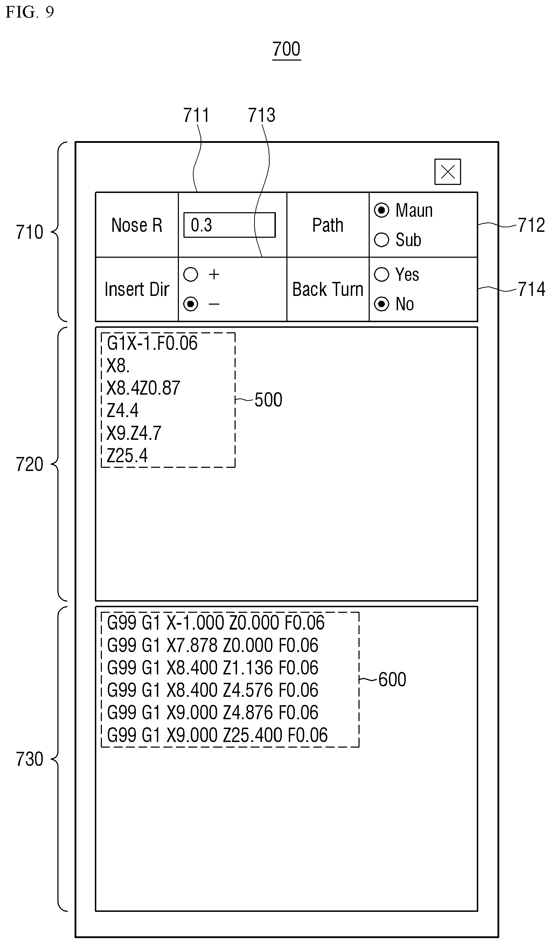

FIG. 8 illustrates a user interface output through the output unit. FIG. 9 illustrates a modified machining program displayed through the user interface.

Referring to FIG. 8, the user interface 700 output through the screen of the output unit 150 may include a parameter area 710, a reference display area 720, and a modified display area 730.

The parameter area 710 is an area where tool parameters can be input or selected by a user. The parameter area 710 may include a radius input area 711, a system selection area 712, an axial direction selection area 713, and an insert direction selection area 714. The radius input area 711 is an area where the tool nose radius R can be input. A user can input the tool nose radius R of the tool 200, which is to be used, to the radius input area 711. The system selection area 712 is an area where a selection command for the main system or the sub-system can be input from the user. The axial direction selection area 713 is an area where a selection command for the insert axial direction can be input from the user. The insert direction selection area 714 is an area where a selection command for the insert direction can be input from the user.

The reference display area 720 is an area where the codes 510 of the machining program 500 are displayed, and the modified display area 730 is an area where the codes 610 of the modified machining program 600 are displayed. Referring to FIG. 9, the codes 510 of the machining program 500 may be displayed in the reference display area 720, and the codes 610 of the modified machining program 600 may be displayed in the modified display area 730. When the modified machining program 600 is generated by the program generation unit 140, the output unit 150 may display the machining program 500 and the modified machining program 600 in the reference display area 720 and the modified display area 730, respectively. The user can judge the integrity of the modified machining program 600 by comparing the machining program 500 and the modified machining program 600 with reference to the machining program 500 and the modified machining program 600 displayed in the reference display area 720 and the modified display area 730.

When completing the judgment of the integrity of the modified machining program 600, the user may transmit the modified machining program 600 to the CNC automatic lathe. The modified machining program 600 may be transmitted to the CNC automatic lathe through the transmission unit 160. The CNC automatic lathe may perform machining on a workpiece according to the received modified machining program 600.

While the present disclosure has been particularly shown and described with reference to exemplary embodiments thereof, it will be understood by those of ordinary skill in the art that various changes in form and detail may be made therein without departing from the spirit and scope of the present disclosure as defined by the following claims. The exemplary embodiments should be considered in a descriptive sense only and not for purposes of limitation.

## Claims

1. A program providing apparatus comprising:
an input unit receiving a machining program which does not consider a tool nose radius of a tool used for turning; and
a program generation unit generating a modified machining program which considers the tool nose radius of the tool by analyzing the machining program.

2. The apparatus of claim 1, wherein the program generation unit generates the modified machining program with reference to the tool nose radius of the tool, a machining system of a computerized numerical control (CNC) automatic lathe which machines a workpiece using the tool, an axial direction of an insert included in the tool, and a direction of the insert.

3. The apparatus of claim 1, wherein the program generation unit determines the outer shape of a final result of a workpiece through the machining program and generates the modified machining program for moving the tool by applying the tool nose radius of the tool to the outer shape of the final result.

4. The apparatus of claim 1, further comprising a storage unit storing a conversion function for each machining type of the tool, wherein the program generation unit generates the modified machining program by applying the conversion function to codes included in the machining program.

5. The apparatus of claim 4, wherein the machining types comprise a type in which the movement path of the tool is changed while a workpiece is being machined.

6. The apparatus of claim 5, wherein the machining types comprise at least one of a type comprising a path where the tool enters a tapered section or leaves the tapered section and a type comprising a path where the tool enters an arc section or leaves the arc section.

7. The apparatus of claim 4, wherein the tool nose radius of the tool is included in the conversion function in the form of a variable.

8. The apparatus of claim 1, further comprising an output unit outputting the machining program and the modified machining program.

9. The apparatus of claim 8, wherein a user interface output through a screen of the output unit comprises:
a parameter area where tool parameters can be input or selected by a user;
a reference display area where codes of the machining program are displayed; and
a modified display area where codes of the modified machining program are displayed.

10. The apparatus of claim 1, further comprising a transmission unit transmitting the modified machining program to the CNC automatic lathe which machines a workpiece using the tool.

11. A program providing method comprising:
receiving a machining program which does not consider a tool nose radius of a tool used for turning; and
generating a modified machining program which considers the tool nose radius of the tool by analyzing the machining program.

12. The method of claim 11, wherein the generating of the modified machining program comprises generating the modified machining program with reference to the tool nose radius of the tool, a machining system of a CNC automatic lathe which machines a workpiece using the tool, an axial direction of an insert included in the tool, and a direction of the insert.

13. The method of claim 11, wherein the generating of the modified machining program comprises:
determining the outer shape of a final result of a workpiece through the machining program; and
generating the modified machining program for moving the tool by applying the tool nose radius of the tool to the outer shape of the final result.

14. The method of claim 11, further comprising storing a conversion function for each machining type of the tool, wherein the generating of the modified machining program comprises generating the modified machining program by applying the conversion function to codes included in the machining program.

15. The method of claim 14, wherein the machining types comprise a type in which the movement path of the tool is changed while a workpiece is being machined.

16. The method of claim 15, wherein the machining types comprise at least one of a type comprising a path where the tool enters a tapered section or leaves the tapered section and a type comprising a path where the tool enters an arc section or leaves the arc section.

17. The method of claim 14, wherein the tool nose radius of the tool is included in the conversion function in the form of a variable.

18. The method of claim 11, further comprising outputting the machining program and the modified machining program using an output unit.

19. The method of claim 18, wherein a user interface output through a screen of the output unit comprises:
a parameter area where tool parameters can be input or selected by a user;
a reference display area where codes of the machining program are displayed; and
a modified display area where codes of the modified machining program are displayed.

20. The method of claim 11, further comprising transmitting the modified machining program to the CNC automatic lathe which machines a workpiece using the tool.
